Europäisches Patentamt

European Patent Office

Office européen des brevets

(19)

(11) Veröffentlichungsnummer: **0 319 717 B1**

# EUROPÄISCHE PATENTSCHRIFT

(12)

(45) Veröffentlichungstag der Patentschrift: **27.12.91**

(51) Int. Cl.5: **A61C 13/30**

(21) Anmeldenummer: **88118486.5**

(22) Anmeldetag: **05.11.88**

---

(54) **Wurzelstift.**

---

(30) Priorität: **10.12.87 DE 3741847**

(43) Veröffentlichungstag der Anmeldung:
**14.06.89 Patentblatt 89/24**

(45) Bekanntmachung des Hinweises auf die
Patenterteilung:
**27.12.91 Patentblatt 91/52**

(84) Benannte Vertragsstaaten:
**AT BE CH DE ES FR GB GR IT LI LU NL SE**

(56) Entgegenhaltungen:
DE-A- 3 540 188
FR-A- 948 779

(73) Patentinhaber: **Degussa Aktiengesellschaft**
**Weissfrauenstrasse 9**
**W-6000 Frankfurt am Main 1(DE)**

(72) Erfinder: **Schiwiora, Harry**
**Theodor-Heuss-Strasse 37**
**W-7530 Pforzheim(DE)**
Erfinder: **Stümke, Manfred, Dr. Dipl.-Phys.**
**Am Waldweg 21**
**W-7530 Pforzheim(DE)**

# EP 0 319 717 B1

## Beschreibung

Die Erfindung betrifft einen Wurzelstift mit einem Fixationsteil aus Edelmetall- oder Nichtedelmetallegierungen, das in den gekrümmten Wurzelkanal einer Zahnwurzel einbringbar ist.

Ein natürlicher menschlicher Zahn besteht aus einer Zahnkrone und einer Zahnwurzel. Die Zahnkrone, die ca. 1/3 der Gesamtlänge des Zahnes ausmacht, ragt sichtbar aus dem Zahnfleisch in die Mundhöhle. Die konisch geformte Zahnwurzel, ca. 2/3 der Gesamtlänge des Zahnes, ist im Kieferkamm verborgen und befestigt. Von der Wurzelspitze bis etwa zur Mitte der Zahnkrone liegt in einem axialen, konischen, gebogenen Kanal der Nerv des Zahnes eingebettet.

Bei Zerstörung der Zahnkrone, z. B. durch Karies oder Gewalteinwirkung, kann die Zahnwurzel nach Entfernung des Nervs in den meisten Fällen für eine prothetische Versorgung zur Schließung der Zahnlücke noch genutzt werden.

Dazu wird nach einem planmäßigen Abtragen der zerstörten Zahnkrone der Wurzelkanal durch einen konischen oder auch zylindrischen Wurzelkanal-Erweiterer maschinell aufgebohrt. Anschließend wird mit einem von Hand zu betätigenden Wurzelkanal-Trimmer die Ausschachtung auf ein definiertes Maß gebracht, das der Form und den Abmessungen eines in den Wurzelkanal einzubringenden Wurzelstiftes entspricht.

Ein solcher Wurzelstift zur Herstellung von künstlichen Zahnaufbauten besteht aus einem der Verankerung in der Zahnwurzel dienenden länglichen, metallischen Fixationsteil und einem am oberen Ende des Fixationsteils angebrachten Kopfteil, auf dem die neue Zahnkrone aufgebaut wird. In der DE-OS 35 40 188 ist ein solcher Wurzelstift beschrieben.

Das Fixationsteil dieser Wurzelstifte ist konisch oder zylindrisch geformt und auf der Oberfläche glatt oder mit einem Gewinde bzw. mit Strukturen versehen. Als Materialien werden meist Edelmetallegierungen des Typs AgPd und AuPtPd und Nichtedelmetallegierungen des Typs TiAlFe bzw. TiAlV und CoCrMo verwendet.

Die Wurzelstifte werden aus jeweils nur einem Material mit gleichen mechanischen Eigenschaften über die Gesamtlänge gefertigt.

Alle Wurzelstifte bzw. ihre Fixationsteile sind rotationssymmetrisch konstruiert, da auch die Wurzelkanal-Erweiterer und Wurzelkanal-Trimmer konisch oder zylindrisch rotationssymmetrisch geformt sind und die Bohrungen im Wurzelkanal entsprechend vorgenommen werden. Die Befestigung der Wurzelstifte in den Wurzelkanälen wird neben einem gewissen Klemmeffekt des Stiftes im Kanal über flache Gewinde, friktiven Paßsitz oder durch Einzementieren mit Phosphatzement vorgenommen.

Bei Wurzeln, die konisch geformt und zumeist gekrümmt sind, muß konisch oder zylindrisch rotationssymmetrisch gebohrt werden. Bei diesen Bohrungen kann den anatomischen Verhältnissen der Zahnwurzel in den wenigsten Fällen Rechnung getragen werden und die Gefahr, beim Bohren in einer Wurzelkrümmung die Wurzel zu perforieren, ist nicht auszuschließen. Überdies kann ein gerades Fixationsteil, das in einer gekrümmten Wurzel zum Teil auch außerhalb des Wurzelkanals implantiert ist, die Belastungen von der Zahnkrone nicht physiologisch auf die Restwurzel übertragen, was mit möglichen Schäden auf den Zahnhalteapparat verbunden ist. Spannungsspitzen in den Bereichen der Wurzel, in denen das Fixationsteil außerhalb des Wurzelkanals liegt, sind bei Belastungen unvermeidlich, wodurch eine Zerstörung der Zahnwurzel stattfinden kann.

Bei Kaubelastung wird der Wurzelstift auch auf Biegung beansprucht, so daß ein nicht einwandfrei an der Wurzelwand anliegendes Fixationsteil durch Wechselbiegebeanspruchung zerstört werden kann. Die Zerstörung kann sehr schnell erfolgen, wenn beim Einsetzen des Wurzelstiftes mit Aufbau eine relativ dicke Zementschicht entsteht, die bei Biegebelastungen des Wurzelstiftes pulverisiert werden kann und dem Stift am oralen Ausgang des Wurzelkanals einen größeren Biegeweg freigibt.

Auf den apikalen Bereich, wo die Wurzelstiftspitze relativ fest sitzt, werden nach verlorengegangener Führung des Stiftes am oralen Ausgang des Wurzelkanals die gesamten Kau- und Biegekräfte übertragen. In der apikalen Zone sitzt der Wurzelstift aufgrund der anatomischen Formen der Zähne zumeist aber nicht analog dem Verlauf des natürlichen Wurzelkanals und der sich verjüngenden gebogenen Wurzel. Es kann auch in diesen Fällen zur Sprengung der Wurzel kommen.

Aus der FR-A-948 779 ist ein Wurzelstift mit einem Fixationsteil bekannt, das auch in den gekrümmten Wurzelkanal einer Zahnwurzel einbringbar ist. Dazu ist die Spitze des konischen Fixationsteils biegsam ausgebildet, während der Rest des Fixationsteils hart und starr ist. Dadurch passt sich die Spitze zwar der Krümmung der Zahnwurzel an, doch liegt der übrige Teil starr im Zahnwurzelkanal, so daß es bei Kaubelastungen auch hier zu einer Sprengung der Wurzel kommen kann.

Es war daher Aufgabe der vorliegenden Erfindung, einen Wurzelstift mit einem Fixationsteil aus Edelmetall- oder Nichtedelmetallegierungen zu entwickeln, bei dem ausgeschlossen werden kann, daß das Fixationsteil zum Teil außerhalb des Wurzelkanals implantiert ist oder es bei Kaubelastungen zu einer Sprengung der Wurzel kommen kann.

Diese Aufgabe wird erfindungsgemäß durch den in Anspruch 1 angegebenen Wurzelstift gelöst.

Von der Herstellung der Zahnstifte her gesehen ist es am günstigsten, wenn das Fixationsteil aus mehreren zusammengefügten Abschnitten besteht, die unterschiedliche mechanische Materialeigenschaften aufweisen, wobei der Abschnitt in der Wurzelspitze die größte Duktilität bzw. geringste Biegefestigkeit besitzt und die Abschnitte zum oralen Ende des Fixationsteils hin immer weniger duktil bzw. immer biegesteifer sind.

Vorteilhafterweise bestehen die Fixationsteile aus Edelmetallegierungen, die durch unterschiedliche Zusammensetzung, thermische und/oder mechanische Behandlung stetig oder abschnittsweise unterschiedliche Duktilitäten bzw. Biegesteifigkeiten aufweisen.

Weiterhin ist es von Vorteil, wenn die Oberfläche des Fixationsteils mit einer Schicht aus einem porösen, zusammenpreßbaren, biokompatiblen Material versehen ist. Hierfür geeignet sind insbesondere Feingold oder Gemische aus Feingold mit Hydroxylapatit oder Trikalziumphosphat.

Das Fixationsteil des erfindungsgemäßen Wurzelstiftes kann aus einem Teil oder vorzugsweise je nach Länge aus zwei bis vier Abschnitten bestehen. Die Abschnitte sind dabei aus einer oder verschiedenen hochkorrosiosfesten Edelmetallegierungen eines gleichen Legierungssystems hergestellt und besitzen unterschiedliche mechanische Eigenschaften. Die Wurzelspitze ist z. B. sehr weich und die nachfolgenden Abschnitte werden immer härter bzw. weniger duktil, so daß der Abschnitt am oralen Ausgang des Wurzelkanals die größte Festigkeit bzw. Härte aufweist.

Die einzelnen Abschnitte können nach verschiedenen Methoden durch Löten, Schweißen oder Sintern miteinander verbunden sein.

Durch die unterschiedlichen mechanischen Eigenschaften, insbesondere durch die unterschiedlichen Duktilitäten innerhalb des Fixationsteils, ist der Wurzelstift verformbar und kann bei der Montage gemäß dem Verlauf des gekrümmten Wurzelkanals mit einem Instrument, das definierte Impulse freisetzen kann, so gesetzt werden, daß er an jeder Stelle dem Verlauf des Wurzelkanals angepasst ist.

Die Oberfläche des Wurzelstiftes ist vorzugsweise mit einer porösen, zusammenpreßbaren Schicht aus einem biokompatiblem, -inertem oder -aktiven Material, insbesondere mit Feingold oder Gemischen aus Feingold mit Hydroxylapatit, Tricalciumphosphat oder ähnlichen Keramikmassen versehen. Die Beschichtung wird mittels bekannter Verfahren, z. B. Plasmaspritzen, Sintern oder Elektrophorese, aufgebracht. Diese Schicht hat die Eigenschaft, sich beim Einsetzen des Stiftes mit definiertem Druck durch plastische Verformung zu verdichten und dadurch einen druckarmen sehr engen Kontakt zu den Wurzelkanalwänden herzustellen. Die Kraft, die zur Deformation der porösen Schicht benötigt wird, darf dabei nur einen Bruchteil der Kraft betragen, die zum Sprengen der Wurzel nötig wäre.

Mit dem erfindungsgemäßen Wurzelstift kann auf die anatomischen Gegebenheiten gekrümmter konischer Wurzeln Rücksicht genommen werden, wobei die prothetische Implantat-Versorgung des Wurzelkanals gegenüber den bisherigen Methoden physiologischen Charakter hat und die Festigkeit der Wurzel erhöhen kann.

Zum maschinellen Bohren und zur Ausschachtung des Wurzelkanals von Hand werden biegsame Instrumente verwendet, damit der Verlauf des Wurzelkanals gewahrt bleibt.

Die Ausschachtung muß nicht durch rotierende Instrumente erfolgen; es können auch biegsame Instrumente oder Werkzeuge eingesetzt werden, die durch Schub- und Zug-Bewegungen abtragen und eine geeignete Form schaffen.

Der erfindungsgemäße Wurzelstift kann nicht nur als Träger für zahnprothetische Konstruktionen dienen, sondern auch zur Wurzelkanalfüllung verwendet werden. Außerdem kann das Fixationsteil über die Wurzelspitze des Zahns hinaus in den Kieferbereich ragen und dort für eine zusätzliche Fixation der Zahnwurzel sorgen.

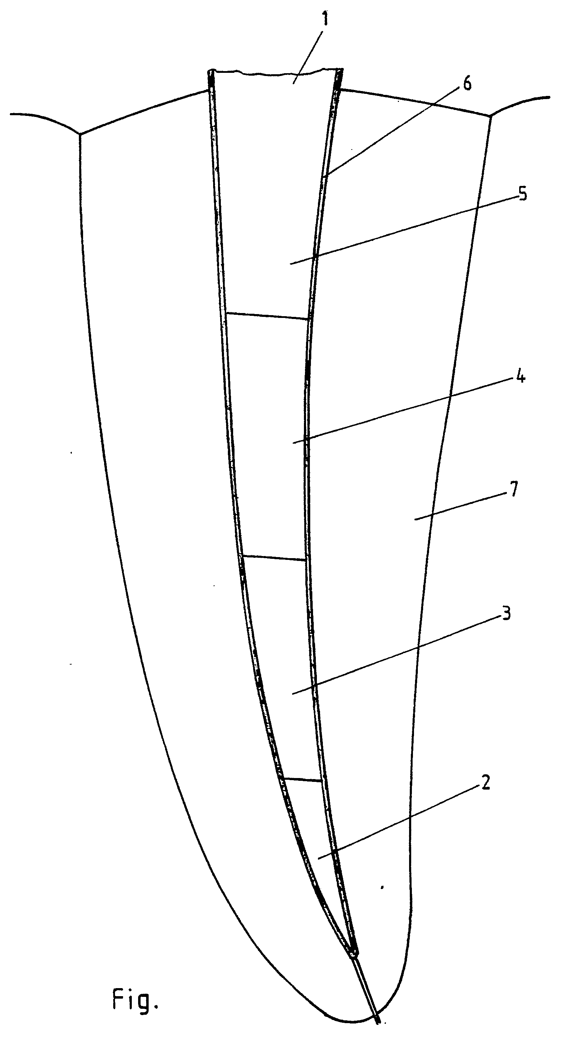

Die Abbildung zeigt schematisch den Fixationsteil eines einer gekrümmten Zahnwurzel angepassten Wurzelstiftes im Längsschnitt. Das Fixationsteil (1) besteht aus vier Abschnitten (2,3,4,5) und ist mit einer Schicht (6) aus einem porösen, zusammenpreßbaren Material bedeckt, die den engen Kontakt zur Zahnwurzel (7) herstellt. Der in der Wurzelspitze liegende Abschnitt (2) ist am duktilsten, der Abschnitt (5) am oralen Ende ist am wenigsten duktil, die übrigen Abschnitte (3,4) liegen in ihren Eigenschaften zwischen beiden Werten.

Folgende Beispiele geben einige erfindungsgemäße Wurzelstifte in ihrer Materialzusammensetzung und ihren mechanischen Eigenschaften Vickershärte, 0,2 %-Dehngrenze und Bruchdehnung wieder, die als Maß der Duktilität angesehen werden können:

**Eigenschaften der Werkstoffe**

| Beispiel | Stiftteil | Werkstoff | Vickershärte HV | | 0,2%-Dehngrenze N/mm² | | Bruchdehnung % | |
|---|---|---|---|---|---|---|---|---|
| | | | w | a | w | a | w | a |
| Beispiel 1 | 1 | Au | 25 | | 25 | | | 40 - 50 |
| | 2 | Degulor i Au78Ag14Pt6,9Pd1IrO,1 | 60 | 230 | 80 | 720 | 15 | 40 |
| | 3 | Permador Au60Pt24,9Pd15IrO,1 | 145 | | 430 | | | 10 |
| Beispiel 2 | 1 | Au Pt Pd | 50 | | 80 | | | 40 |
| | 2 | Au Pt Pd | 100 | | 250 | | | 28 |
| | 3 | Au Pt Pd | 160 | | 460 | | | 16 |
| | 4 | Au Pt Pd | 260 | | 800 | | | 10 |
| Beispiel 3 | 1 | Ti 99,8 | 120 | | 250 | | | 22 |
| | 2 | Ti Al Fe | 25 - 280 | | 895 | | | 16 |

## Patentansprüche

1. Wurzelstift mit einem Fixationsteil aus Edelmetall- oder Nichtedelmetallegierungen, das in den gekrümmten Wurzelkanal einer Zahnwurzel einbringbar ist, wobei das Material des Fixationsteils in Längsrichtung gesehen örtlich unterschiedliche Duktilitäten oder Biegesteifigkeiten aufweist und der in der Wurzelspitze liegende Teil des Fixationsteils die größte Duktilität bzw. geringste Biegesteifigkeit besitzt, dadurch gekennzeichnet, daß das Material vor der Wurzelspitze bis zum oralen Ende des Fixationsteils hin stetig oder abschnittsweise immer weniger duktil bzw. immer biegesteifer ist.

2. Wurzelstift nach Anspruch 1,
dadurch gekennzeichnet,
daß das Fixationsteil aus mehreren zusammengefügten Abschnitten besteht, die unterschiedliche mechanische Materialeigenschaften aufweisen.

3. Wurzelstift nach Anspruch 1 und 2,
dadurch gekennzeichnet,
daß das Fixationsteil aus Edelmetallegierungen besteht, die durch unterschiedliche Zusammensetzung, thermische und/oder mechanische Behandlung stetig oder abschnittsweise unterschiedliche Duktilitäten bzw. Biegesteifigkeiten aufweisen.

4. Wurzelstift nach Anspruch 1 bis 3,
dadurch gekennzeichnet,
daß die Oberfläche des Fixationsteils mit einer Schicht aus einem porösen, zusammenpreßbaren, biokompatiblen Material versehen ist.

5. Wurzelstift nach Anspruch 4,
dadurch gekennzeichnet,
daß die Schicht aus Feingold oder Gemischen aus Feingold mit Hydroxylapatit oder Trikalziumphosphat besteht.

6. Wurzelstift nach Anspruch 1 bis 5,
dadurch gekennzeichnet,
daß er als Träger für zahnprothetische Konstruktionen dient.

7. Wurzelstift nach Anspruch 1 bis 5,
dadurch gekennzeichnet,
daß er zur Wurzelkanalfüllung verwendet wird.

## Claims

1. A root pin comprising a fixing part of noble metal or base metal alloys which is designed to be inserted into the curved root channel of a tooth root, the constituent material of the fixing part locally having different ductilities in the longitudinal direction and that part of the fixing part which lies in the root tip having the greatest ductility or lowest flexural rigidity, characterized in that the material is increasingly less ductile or increasingly more flexurally rigid either continuously or in sections from the root tip to the oral end of the fixing part.

2. A root pin as claimed in claim 1, characterized in that the fixing part consists of several sections fitted together with different mechanical material properties.

3. A root pin as claimed in claims 1 and 2, characterized in that the fixing part consists of noble metal alloys which have different ductilities or flexural rigidities either continuously or in sections as a result of differences in composition, thermal and/or mechanical treatment.

4. A root pin as claimed in claims 1 to 3, characterized in that the surface of the fixing part is provided with a coating of a porous, compressible, biocompatible material.

5. A root pin as claimed in claim 4, characterized in that the coating consists of fine gold or mixtures of fine gold with hydroxylapatite or tricalcium phosphate.

6. A root pin as claimed in claims 1 to 5, characterized in that it serves as a support for dental prosthetic constructions.

7. A root pin as claimed in claims 1 to 5, characterized in that it is used to fill root channels.

**Revendications**

1. Tenon radiculaire comportant un élément de fixation en alliages de métaux nobles ou de métaux non précieux, qui peut être introduit dans le canal radiculaire courbé d'une racine dentaire, le matériau de l'élément de fixation présentant dans le sens de la longueur, vue dans l'espace, des ductilités ou résistances à la flexion différentes, et la partie de l'élément de fixation située à la pointe de la racine présentant la plus grande ductilité ou la plus faible résistance à la flexion, caractérisé en ce que le matériau de la pointe de la racine à l'extrémité de l'élément de fixation donnant dans la cavité buccale est, en continu ou par segments, de moins en moins ductile ou de plus en plus résistant à la flexion.

2. Tenon radiculaire selon la revendication 1, caractérisé en ce que l'élément de fixation est constitué de plusieurs segments assemblés qui présentent des propriétés mécaniques de matériau distinctes.

3. Tenon radiculaire selon la revendication 1 ou 2, caractérisé en ce que l'élément de fixation est constitué d'alliages de métaux nobles qui présentent en continu ou par segments, en raison d'une composition variable, d'un traitement thermique et/ou mécanique, des ductilités ou résistances à la flexion distinctes.

4. Tenon radiculaire selon l'une quelconque des revendications 1 à 3, caractérisé en ce que la surface de l'élément de fixation est munie d'une couche d'un matériau biocompatible, poreux, comprimable.

5. Tenon radiculaire selon la revendication 4, caractérisé en ce que la couche est constituée d'or fin ou de mélanges d'or fin et d'hydroxylapatite ou de phosphate tricalcique.

6. Tenon radiculaire selon l'une quelconque des revendications 1 à 5, caractérisé en ce qu'il sert de support pour des constructions de prothèse dentaire.

7. Tenon radiculaire selon l'une quelconque des revendications 1 à 5, caractérisé en ce qu'il est utilisé pour l'obturation de canaux radiculaires.

Fig.